# EUROPEAN PATENT SPECIFICATION

(11) **EP 1 152 067 B1**
(45) Date of publication and mention of the grant of the patent: **10.03.2010**
(21) Application number: 01304011.8
(22) Date of filing: 02.05.2001
(51) Int. Cl.: C23C 24/04

(54) **Cold gas-dynamic spraying**
Kaltes gasdynamisches Spritzverfahren
Projection gazodynamique à froid

(30) Priority: 02.05.2000 US 561980
(43) Date of publication of application: 07.11.2001
(73) Proprietor: Linde, Inc., New Providence, NJ 07974-2082 (US)
(72) Inventor: Ji, Wenchang, Doylestown, Pennsylvania 18901 (US); Shirley, Arthur Irving, Piscataway, New Jersey 08854 (US); McGowan, Michael Joseph, Valley Cottage, New York 10989 (US); Morgan, Daniel Arthur, Westfield, New Jersey 07090 (US)
(74) Representative: Wickham, Michael

(56) References cited:
- EP-A- 0 554 886
- DE-A- 1 962 698
- DE-C- 3 704 551
- GB-A- 1 273 159
- US-A- 3 100 724
- US-A- 4 867 768
- US-A- 6 042 892
- PATENT ABSTRACTS OF JAPAN vol. 1999, no. 11, 30 September 1999 (1999-09-30) & JP 11 169681 A (NGK INSULATORS LTD), 29 June 1999 (1999-06-29)

## Description

The invention relates to an improvement in a cold gas-dynamic spraying process comprising purifying the spent carrier gas used in the spraying process. More particularly, the invention provides for the use of a ceramic filter to purify and recycle the carrier gas in a cold gas-dynamic spraying process.

Various methods are employed to coat metallic surfaces. These methods vary according to the type of coating and its purpose, be it decorative or for corrosion resistance. One process is cold gas-dynamic spray coating which involves spraying small particle powders at high velocities towards the substrate to be coated. On impact, the small particles, which are typically metallic, plastically deform on the substrate and form a metallic bond. This is a "no-heat" process and differs from other processes such as thermal spray, plasma spray and electroplating which all require heat and/or dangerous chemicals which can limit their use.

In principle, the cold, gas-dynamic spray process relies on kinetic energy metallization (KEM) which utilises powders typically having diameters of 1 to 50µm. This is in contrast to other thermal processes where particles of 50 to 200µm diameters are employed. These larger particles would bounce off the substrating rather than plastically deforming and forming the metallic bond.

Helium gas is typically employed as the medium to carry the particles because it has a high sonic velocity and can achieve particle speeds sufficient to achieve the metallic bonding. The process will typically operate between 1.135 to 2.17MPa (150 to 300 psig) and can run up to 3.55MPa (500 psig). The helium flow rates are in the range of 4.6 to 6.1 M³/minute (150 to 200 Scfm) with a powder flow rate of 5 to 15 kg/hr when the particle size is equal to 1 to 50µm. Maximum levels of solid generally do not exceed 20% of the helium flow rate. This results in a deposition efficiency of about 25% to 40% being the amount of powder fed in to the system over the amount actually deposited.

This will result in an impure helium stream leaving the spraying chamber at temperatures between 100°C and 400°C. Typically this helium is fed to a scrubber and discharged to the atmosphere. However, the invention provides a process whereby the used helium can be cleaned and recycled back for use in the spraying chamber. This results in improved efficiency and cost savings as the amount of helium employed in the process decreases.

The invention is concerned with the provision of an improved cold gas-dynamic spray-coating process which comprises directing the used, particle-laden carrier gas to a high temperature ceramic filter. The ceramic filter separates the exhaust carrier gas from the particles and a gas analyser determines the purity of the carrier gas. If the carrier gas meets requisite purity, it is then recycled back to the powder reservoir mixing device and in to the spraying chamber with no further treatment.

If the carrier gas is not pure enough for spraying, a multi-valve assembly can direct the carrier gas through a heat exchanger and then to a gas purification unit, such as a pressure swing adsorption or membrane system to separate the carrier gas from oxygen, nitrogen, water and other inert gases.

In accordance with the invention there is provided cold gas-dynamic spraying process comprising spraying a carrier gas containing particulates in the form of a powder on to a substrate to coat the substrate in a spraying chamber, the process comprising removing the particulate-containing carrier gas from the spraying chamber the process being characterized by comprising the steps of directing the gas in to a ceramic filter; removing the particulate-free carrier gas and particulates from the ceramic filter; analysing the purity of the particulate-free gas and directing the gas in to a multi-valve assembly.

The particulate-free carrier gas is analysed in a gas analyser and directed to the multi-valve assembly. Depending upon the purity of the gas, it is preferably directed back to the spraying chamber for re-use or it is directed to a gas purification unit. The multi-valve can be actuated so that inert gases can be vented from the multi-valve while the carrier gas is directed towards either the spray chamber or the gas purification unit.

For a better understanding of the invention, reference will now be made, by way of exemplification only, to the accompanying drawings, in which a representation of the gas-dynamic spraying process in accordance with the invention. The process is conducted in a system generally included at 10 and begins in a powder reservoir/feeder/mixing chamber 20 where the powder and the gas are mixed together. Typical powders are metallic and include aluminium, zinc, tin, copper, nickel, titanium, iron, vanadium and cobalt. The powder/gas mixture is applied to the substrate (not shown here) through a nozzle 21 in a processing chamber 25. The exhaust gas containing undeposited particles exits the chamber 25 through a line 26. Typically, the gas flow rate in to the chamber is 4.6 to 6.1 m³/minute (150 to 200 Scfm) with a particle content of 5 to 15 kg/hr. The process is preferably operated at a pressure of 1.135 to 2.17 MPa (150 to 300 psig). The gas leaving the spraying chamber will typically have a temperature of 100°C to 400°C.

The carrier gas preferably comprises helium, nitrogen, argon, hydrogen, oxygen, steam, air or mixtures thereof. Most preferably, the gas comprises helium.

The line 26 carries the exhaust gas/particle mixture to the high temperature ceramic filter 30. The filter 30 is a monolith ceramic microporous membrane module such as those commercially available from Ceramem Corporation of Waltham (USA). These membrane modules are manufactured by coating one or more membrane layers on large diameter ceramic monolith supports. The membrane coating typically has pore sizes ranging from about 50A to 1.3 microns for microfiltration and ultrafiltration applications.

The monolith supports are produced in a variety of configurations by Corning, Inc. (USA). Each monolith support contains a large number of passageways or cells which extend from an inlet end face to an outlet end face. The cell structure can be round, square, or triangular and cell densities vary from 4 to 62 cells/cm² (25 to 400 cells/sq. in). The porosity of the honeycomb support varies from 30% to 50% with the mean pore size ranging from about 4 to 50 microns with broad pore size distribution. The ceramic membranes can generally withstand operating temperatures up to 1000°C and pressures in excess of 30 MPa (300 atmospheres) in suitably designed pressure vessels.

For gas filtration purposes, as applied to the invention, the membrane should be operated as a dead-ended filter. The monolith structure is modified by plugging alternating cells at the upstream face of the device with high-temperature inorganic cement. Cells which are open at the upstream face of the monolith are plugged at the downstream face. The particulate laden gas is constrained to flow through the porous cell wall and is filtered on and within the cell walls of the monolith.

In operation, particulate-containing gas flows in to membrane-coated passageways. The particulates are collected on the membrane surface and the filtered gas exits the module via the downstream passageways. At appropriate intervals, the filter is cleaned by backpulse operation to discharge the collected particulates. Since the ceramic filters need to be "backpurged" to unclog the pores, multiple filters may be used for continuous operation, one or more in use while the others are being regenerated. In use of the invention, some of the purified gas may be diverted after the gas purification unit for use in purging the ceramic filters.

The particles removed from the gas will come to rest at the bottom of the ceramic membrane where a particle feeder 31 such as a screw mechanism or extrusion device, will return via line 32 the particles for reuse in the spraying operation. The carrier gas that is cleaned of particles will leave the ceramic membrane via line 33 to a gas analyser 35.
The carrier gas leaves the gas analyser through line 36 to a multi-valve assembly 40. The term "multi-valve" is meant to include both multiple way valves and multi-valves. If the gas analyser has determined that the gas is of sufficient purity, the multi-valve is actuated to allow the gas to exit by a line 56 to a valve 57 and in to a line 58 where the gas is returned to the mixing chamber 20 for reuse in the cold gas-dynamic spraying process.

Any inert gas is vented from the multi-valve via a line 41. If the carrier gas still contains impurities, either gaseous or particulate, it will leave the multi-valve through a line 42 through a heat exchanger 45 where the gas is cooled down. The cooler gas exits the heat exchanger through a line 46 to a gas purification unit 50.

When at least one gaseous impurity is air, a preferred gas purification process is pressure swing adsorption (PSA) using a nitrogen- and oxygen-selective adsorbent. Typical adsorbents are zeolite molecular sieves and include, for example, 13X, CaX, 4A, 5A, etc. The cycle of the pressure swing adsorption process generally comprises an adsorption step, an equalisation-depressurisation step, a counter current depressurisation step, an equalisation-depressurisation step and a repressurisation step.

When the pressure swing adsorption is performed, it is preferably carried out in an adsorption system comprising two or more adsorption vessels operated in parallel and out of phase. This arrangement is particularly useful when the feed gas to the adsorption system comprises gaseous exhaust streams withdrawn from two or more of the process chambers.

In a separate embodiment of the invention, the two or more process chambers are operated out of phase and in batch mode, thereby producing the feed gas at a variable flow rate. In this embodiment, the duration of the adsorption step is preferably extended during periods when the feed gas is produced at lower flow rates and reduced during periods when the feed gas is produced at higher flow rate. Preferably, the duration of the adsorption step is adjusted in response to changes in the purity of the non-adsorbed gas product stream from the PSA system.

In preferred embodiments, the gas purification process is carried out in an adsorption system comprising four adsorption vessels operated 90° out of phase. In such embodiments, the duration of the adsorption step is preferably extended during a period when vessel is undergoing the adsorption step, one vessel is undergoing the equalisation-depressurisation step, one vessel is undergoing the equalisation-repressurisation step and one vessel is undergoing the repressurisation step. The repressurisation step may comprise repressurising the vessel with product stream produced during adsorption steps of the process, the feed gas or combinations of these.

The gases removed from the carrier gas by this process, namely, N₂, O₂ and moisture (water), are removed from the gas purification unit by a line 51 to a vent. The purified gas leaves the purification unit via a line 54 to a valve 52 where it can be returned through a line 53 to the ceramic monolith to backpulse and clean the filters, or through a line 55 to a valve 57. Optionally, a heater unit (not shown) can be attached to the line 55 prior to the valve 57 to put some heat back in to the gas prior to its return through a line 58 to the gas mixing device 20.

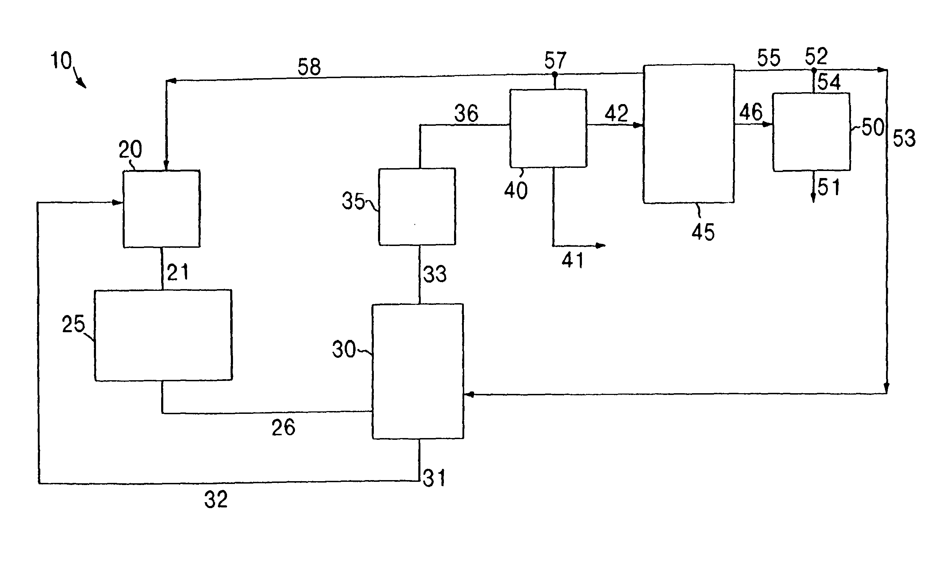

## Claims

1. A cold gas-dynamic spraying process comprising spraying a carrier gas containing particulates in the form of a powder on to a substrate thereby coating the substrate in a spraying chamber, the process comprising removing the particulate-containing carrier gas from the chamber; the process being **characterized by** comprising the steps of
directing the gas in to a ceramic filter, thereby separating the gas from the particulates;
removing the particulate-free carrier gas and the particulates from the ceramic filter;
analysing the purity of the particulate-free carrier gas; and
directing the particulate-free carrier gas in to a multi-valve assembly.

2. A process according to Claim 1 in which the particulates are returned to the spraying chamber.

3. A process according to Claim 1 or Claim 2 in which the particulate-free carrier gas has oxygen, nitrogen and water therein.

4. A process according to any preceding claim in which the multi-valve is actuated according to the purity of the particle-free carrier gas.

5. A process according to any preceding claim in which the particle-free carrier gas is directed from the multi-valve to the spraying chamber.

6. A process according to any one of Claims 1 to 4 in which the particle-free carrier gas is directed from the multi-valve to a purification unit.

7. A process according to Claims 4 to 6 comprising actuating the multi-valve to vent other gases from the purified carrier gas.

8. A process according to any preceding claim in which the purified particle-free carrier gas is returned to the spraying chamber.

9. A process according to any preceding claim in which the ceramic filter is a monolith ceramic microporous membrane module.

10. A process according to any preceding claim in which the carrier gas comprises helium, nitrogen, argon, hydrogen, oxygen, steam, air or mixtures thereof.

## Patentansprüche

1. Kaltes gasdynamisches Sprühverfahren, welches das Sprühen eines Trägergases, das Teilchen in der Form eines Pulvers enthält, auf ein Substrat umfasst, wodurch das Substrat in einer Sprühkammer beschichtet wird, wobei das Verfahren **dadurch gekennzeichnet ist, dass** es die folgenden Schritte aufweist:
Entfernen des Trägergases, welches Teilchen enthält, aus der Kammer;
Leiten des Gases in einen Keramikfilter, wodurch das Gas von den Teilchen getrennt wird;
Entfernen des teilchenfreien Trägergases und der Teilchen aus dem Keramikfilter;
Analysieren der Reinheit des teilchenfreien Trägergases und
Leiten des teilchenfreien Trägergases in eine Mehrventilanordnung.

2. Verfahren nach Anspruch 1, wobei die Teilchen in die Sprühkammer zurückgeführt werden.

3. Verfahren nach Anspruch 1 oder 2, wobei das teilchenfreie Trägergas Sauerstoff, Stickstoff und Wasser aufweist.

4. Verfahren nach einem der vorhergehenden Ansprüche, wobei die Mehrventilanordnung gemäß der Reinheit des teilchenfreien Trägergases betätigt wird.

5. Verfahren nach einem der vorhergehenden Ansprüche, wobei das teilchenfreie Trägergas aus der Mehrventilanordnung in die Sprühkammer geleitet wird.

6. Verfahren nach einem der Ansprüche 1 bis 4, wobei das teilchenfreie Trägergas aus der Mehrventilanordnung in eine Reinigungseinheit geleitet wird.

7. Verfahren nach den Ansprüchen 4 bis 6, welches das Betätigen der Mehrventilanordnung umfasst, um andere Gase aus dem gereinigten Trägergas abzulassen.

8. Verfahren nach einem der vorhergehenden Ansprüche, wobei das gereinigte teilchenfreie Trägergas in die Sprühkammer zurückgeführt wird.

9. Verfahren nach einem der vorhergehenden Ansprüche, wobei es sich bei dem Keramikfilter um ein monolithisches keramisches mikroporöses Membranmodul handelt.

10. Verfahren nach einem der vorhergehenden Ansprüche, wobei das Trägergas Helium, Stickstoff, Argon, Wasserstoff, Sauerstoff, Wasserdampf, Luft oder Mischungen davon aufweist.

## Revendications

1. Procédé de projection gazodynamique à froid, comprenant la projection d'un gaz porteur contenant des particules sous la forme d'une poudre sur un substrat, revêtant ainsi le substrat dans une chambre de projection, le procédé comprenant l'élimination du gaz porteur contenant des particules hors de la chambre, le procédé étant **caractérisé en ce qu'**il comprend les étapes suivantes:
diriger le gaz vers un filtre de céramique, séparant ainsi le gaz des particules;
éliminer le gaz porteur exempt de particules et les particules du filtre de céramique;
analyser la pureté du gaz porteur exempt de particules; et
diriger le gaz porteur exempt de particules dans un ensemble à soupapes multiples.

2. Procédé selon la revendication 1, dans lequel les particules sont renvoyées vers la chambre de projection.

3. Procédé selon la revendication 1 ou la revendication 2, dans lequel le gaz porteur exempt de particules contient de l'oxygène, de l'azote et de l'eau.

4. Procédé selon l'une quelconque des revendications précédentes, dans lequel les soupapes multiples sont actionnées en fonction de la pureté du gaz porteur exempt de particules.

5. Procédé selon l'une quelconque des revendications précédentes, dans lequel le gaz porteur exempt de particules est dirigé des soupapes multiples vers la chambre de projection.

6. Procédé selon l'une quelconque des revendications 1 à 4, dans lequel le gaz porteur exempt de particules est dirigé des soupapes multiples vers une unité de purification.

7. Procédé selon les revendications 4 à 6, comprenant l'actionnement des soupapes multiples pour évacuer d'autres gaz du gaz porteur purifié.

8. Procédé selon l'une quelconque des revendications précédentes, dans lequel le gaz porteur exempt de particules purifié est renvoyé vers la chambre de projection.

9. Procédé selon l'une quelconque des revendications précédentes, dans lequel le filtre de céramique est un module de membrane micro-poreuse céramique monolithique.

10. Procédé selon l'une quelconque des revendications précédentes, dans lequel le gaz porteur comprend l'hélium, l'azote, l'argon, l'hydrogène, l'oxygène, la vapeur d'eau, l'air ou des mélanges de ceux-ci.
